# EUROPEAN PATENT SPECIFICATION

(11) **EP 1 345 403 B1**
(45) Date of publication and mention of the grant of the patent: **15.06.2005**
(21) Application number: 03100608.3
(22) Date of filing: 11.03.2003
(51) Int. Cl.: H04M 15/00, H04L 12/14, G07F 19/00, G06F 17/60, H04L 29/06, H04L 12/22

(54) **Billing a subscriber station without a subscriber identity module**
Vergebührung für eine Teilnehmerstation ohne SIM-Karte
Facturation d'une station d'abonné sans module d'identification d'abonné

(30) Priority: 15.03.2002 FI 20020491
(43) Date of publication of application: 17.09.2003
(73) Proprietor: TeliaSonera Finland Oyj, 00510 Helsinki (FI)
(72) Inventor: Kröger, Jouni, 00100, Helsinki (FI)
(74) Representative: Holmström, Stefan Mikael

(56) References cited:
- WO-A-00/56105
- WO-A-00/67446
- WO-A-01/06752
- WO-A-01/93461
- GERDES M ET AL: "MOBILE PAYMENT SOLUTIONS" TOWARDS THE E-SOCIETY: E-COMMERCE, E-BUSINESS AND E-GOVERNMENT. IFIP CONFERENCE ON E-COMMERCE ON E-COMMERCE, E-BUSINESS AND E-GOVERNMENT. PROCEEDINGS IFIP CONFERENCE ON E-COMMERCE, E-BUSINESS, E-GOVERNMENT, XX, XX, 3 October 2001 (2001-10-03), pages 629-642, XP001106006
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, no. 3, 1998, pages 110-117, XP000783249 ISSN: 0014-0171

## Description

### FIELD OF THE INVENTION

The present invention relates to a solution providing an operator with a possibility to bill for telecommunication services used by a subscriber station without a subscriber identity module.

### BACKGROUND OF THE INVENTION

It is known from the prior art to provide subscriber stations of a telecommunications system with a subscriber identity module, which allows the subscriber station to be identified and authenticated reliably. When such a subscriber device with a subscriber identity module (SIM) is used in a telecommunication network, the operator knows who the subscriber to be billed for the use of the telecommunication network is.

The subscriber identity module, in which the required information is stored, can be integrated in a subscriber station, in which case the required information is stored in the memory of the subscriber device. Frequently, however, the subscriber identity module is located in a separate circuit to be attached to the subscriber device. Examples of such subscriber devices are mobile phones having SIM cards in which the required information is stored, and portable computers to which a network interface card is attached, the memory of which contains, for example, the information required for establishing an Internet connection via a wireless local network, for instance a WLAN network (Wireless Local Area Network).

A drawback in the known solutions is that if the user has several different subscriber devices establishing a connection to different telecommunication networks (e.g. to a mobile network and a WLAN network), he/she must usually open several different accounts via which the billing for the use takes place. Thus, the user also receives several different bills.
Previously there are known from WO-A-9901990, WO-A-0106752, WO-A-0056105, WO-A-0067446 and WO-A-0193461 different solutions for paying with mobile stations and for authenticating mobile stations. However, none of these prior art solutions have been able to present a simple and user friendly solution which would make it possible for a user to access a communication network with a subscriber device without a subscriber identity module.

### SUMMARY OF THE INVENTION

An object of the present invention is to solve the above-described problem and to provide a solution which allows the telecommunication services used by a subscriber device without a subscriber identity module to be billed for via a telecommunication network whose subscriber identity module does not exist in the subscriber device.

This object is achieved with a method according to claim 1, a telecommunications system according to claim 3, a subscriber device with a subscriber identity module according to claim 9 and a subscriber device without a subscriber identity module according to claim 13.

The solution according to the invention is based on the idea that when a confirmation is received from the user of the subscriber device with a subscriber identity module on the user agreeing to pay the costs relating to the use of the subscriber device without a subscriber identity module, telecommunication services can be offered to this particular subscriber device without a subscriber identity module, which services the subscriber of the subscriber device with a subscriber identity module is billed for. Thus, the billing system of a mobile network, for example, can be utilized in billing a subscriber device not having the subscriber identity module of the mobile network in question.

This becomes possible when the identifier of a subscriber device with a subscriber identity module is stored in the memory of a subscriber device without a subscriber identity module, the subscriber device without a subscriber identity module sending the identifier to the network with a connection request. In this context, the identifier refers to any identifier which is known by the subscriber and on the basis of which a telecommunications system can identify a subscriber device with a subscriber identity module. In the case of a mobile station, for example, the identifier can be formed of its MSISDN (Mobile Station International ISDN Number).

The solution according to the invention provides the advantage that the user can direct the costs caused by the use of the subscriber device without a subscriber identity module to be billed via a particular telecommunication network although the subscriber device without a subscriber identity module used by him/her does not have the subscriber identity module of that particular telecommunication network. A user who has several subscriber devices available can thus direct the costs caused by their use to the bill for a subscriber device with a subscriber identity module, whereby the user receives only one bill, irrespective of which subscriber device has been used. Thus, it is sufficient that the user has one subscriber device that has the subscriber identity module of the telecommunication network via which the user is billed. The rest of the subscriber devices can be devices without a subscriber identity module; in other words the subscriber identity module of the telecommunication network via which the billing takes place is not needed.

In a preferred embodiment of the invention, the subscriber device without a subscriber identity module is arranged to send a connection request in response to an activation message received from a subscriber device with a subscriber identity module. This embodiment allows the server in the telecommunications system to trigger the establishment of a connection to the subscriber device without a subscriber identity module by sending an activation command to the subscriber device with a subscriber identity module, which activation command causes the subscriber device with a subscriber identity module to send an activation message to the subscriber device without a subscriber identity module. This embodiment is advantageous for instance when the user has ordered content from a service provider to a subscriber device without a subscriber identity module. If there is no connection from the subscriber device without a subscriber identity module to the telecommunication network when the ordered content is ready for delivery, the server of the service provider can trigger the establishment of the required connection.

Preferred embodiments of the method, telecommunications system, subscriber device with a subscriber identity module and a subscriber device without a subscriber identity module become apparent from the attached dependent claims 2, 4 to 8, 10 to 12 and 14.

### BRIEF DESCRIPTION OF FIGURES

The invention will now be described in an exemplary manner with reference to the attached figures, of which
Figure 1 shows a block diagram of a first preferred embodiment of the system according to the invention;
Figure 2 illustrates signalling in the system of Figure 1;
Figure 3 shows a block diagram of a second preferred embodiment of the system according to the invention; and
Figure 4 illustrates signalling in the system of Figure 3.

### DESCRIPTION OF PREFERRED EMBODIMENTS

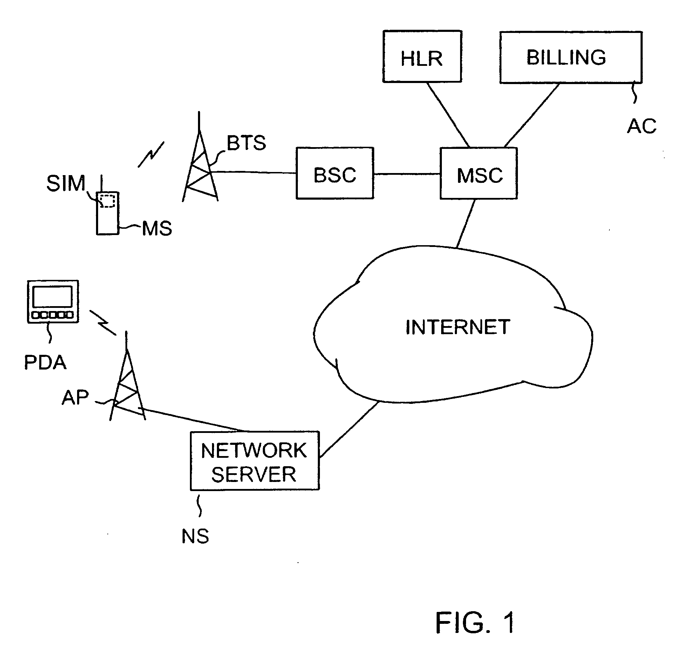

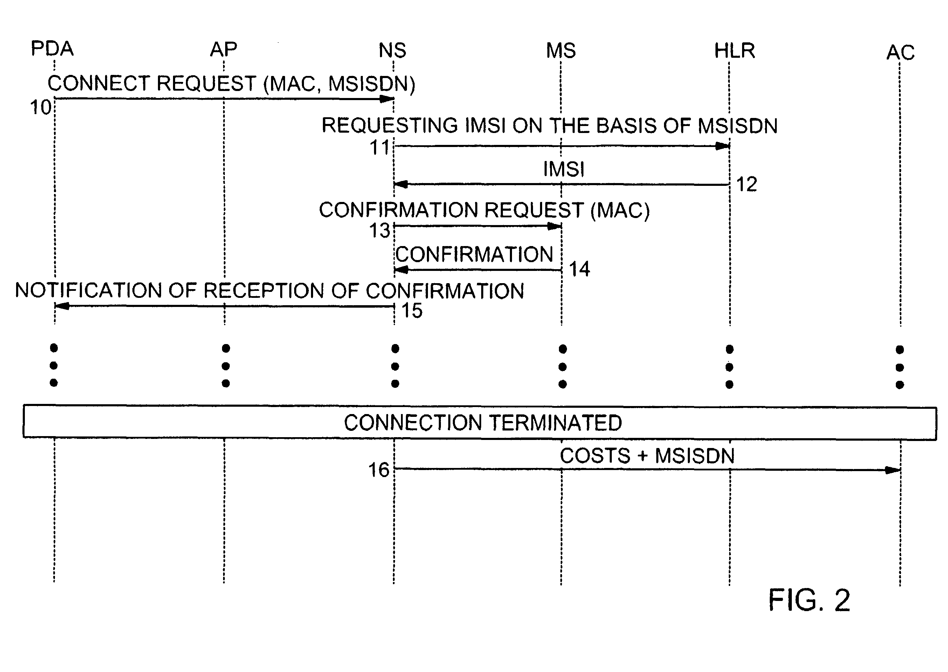

In the following, a first preferred embodiment of the invention will be described in more detail with reference to the block diagram of Figure 1 and the signalling diagram of Figure 2.

In the case of Figure 1, the subscriber has available a subscriber device MS with a subscriber identity module and a subscriber device PDA without a subscriber identity module. The subscriber device MS with a subscriber identity module can be, for example, a mobile station provided with the subscriber identity module SIM of the subscriber of a mobile network, formed of a SIM card. In the GSM (Global System for Mobile Communications) system, for example, the subscriber identity module is formed specifically of a SIM card detachably attached to a mobile station, but the scope of the invention also includes a case where the subscriber identity module is a fixed part of a subscriber device MS with a subscriber identity module.

The subscriber device PDA without a subscriber identity module shown in Figure 1 can be, for instance, a handheld computer comprising means for establishing a connection to a network server NS via an access point. In this context, the term "subscriber device without a subscriber identity module" means that the subscriber device PDA in question does not have the subscriber identity module of a mobile network, i.e. a SIM card.

Figure 1 shows in an exemplary manner that the subscriber device PDA without a subscriber identity module establishes a connection to a network server NS specifically via a wireless connection and a wireless access point AP formed of the base station of a radio system. Such a radio system can be, for instance, a WLAN system or a system based on Bluetooth. However, it would be possible within the scope of the invention for said access point to be a wired access point, at its simplest a plug, to which the subscriber device without a subscriber identity module would be connected via a cable in such a way that the subscriber device without a subscriber identity module could establish a connection to the network server.

When wishing to use telecommunication services with a subscriber device without a subscriber identity module and to direct the costs caused by its use to the mobile station bill, the user of the subscriber device MS with a subscriber identity module and the subscriber device PDA without a subscriber identity module stores the identifier MSISDN of the subscriber device MS with a subscriber module identity in the memory of the subscriber device without a subscriber identity module. The identifier can be any identifier which is known by the user and by means of which the telecommunication network of the subscriber device with a subscriber identity module can identify the particular subscriber device with a subscriber identity module. When the subscriber device MS with a subscriber identity module is a mobile station, the identifier can be formed of the MSISDN identifier of the mobile station, i.e. in practice of its telephone number. In addition to the above-mentioned identifier, also the individual identifier MAC of the device in question has been stored in the memory of the subscriber device PDA without a subscriber identity module. The identifier (serial number) in question is usually stored in the memory of the subscriber device without a subscriber identity module as early as at the manufacturing stage.

In order to establish a telecommunication connection, the subscriber device PDA without a subscriber identity module sends in step 10 a connection request to the network server NS via the access point AP. The subscriber device PDA without a subscriber identity module sends with the connection request the identifier MSISDN and its own identifier MAC. Deviating from the signalling diagram of Figure 2, the connection request (like all other messages in the figure) can be in two parts, in which case the subscriber device PDA without a subscriber identity module sends at first a call including its own identifier MAC, and after this, it replies to the response transmitted from the access point/network server by sending another message which includes the identifier MSISDN of the subscriber device with a subscriber identity module.

When it knows the identifiers MAC and MSISDN, the network server NS detects on the basis of the identifier MSISDN that the subscriber device with a subscriber identity module is a mobile station. Thus, in step 11, it requests the subscriber register HLR for the IMSI (International Mobile Subscriber Identity) of the subscriber device with a subscriber identity module on the basis of the identifier MSISDN. The subscriber register HLR replies to the request in step 12 by sending an IMSI identifier to the network server NS. Deviating from the case of Figure 2, it is possible that the network server has received from the subscriber device without a subscriber identity module such an identifier by means of which it can directly send a confirmation request to the subscriber device with a subscriber identity module. It may be the case, for example, that the MSISDN identifier could in some systems be used directly without having to request the subscriber register for the IMSI identifier. In such a case, the messages of steps 11 and 12 are not needed.

In step 13, the network server NS sends a confirmation request to the subscriber device MS with a subscriber identity module via the mobile services switching centre MSC, the base station controller BSC and the base transceiver station BTS of the mobile network. The network server includes in the confirmation request the identifier MAC of the subscriber device PDA without a subscriber identity module, so that the user of the subscriber device with a subscriber identity module can identify the subscriber device PDA without a subscriber identity module.

The subscriber device MS with a subscriber identity module comprises a subscriber identity module SIM having a memory in which the information required for the authentication of the subscriber device MS is stored. When the subscriber device MS with a subscriber identity module receives the confirmation request, it shows on the display belonging to the user interface, for instance, a request to confirm that the user agrees to pay the costs caused by the use of the subscriber device without a subscriber identity module having the identifier MAC. If the user confirms via the user interface that he/she agrees to pay the costs, the subscriber device MS with a subscriber identity module sends, in step 14, a confirmation which is transmitted by the telecommunication network to the network server NS. When the network server has received the confirmation, it provides the subscriber device without the subscriber identity module with access to the telecommunication network. In addition, the network server NS notifies the subscriber device PDA of the matter in step 15.

The user of the subscriber device MS with a subscriber identity module is billed for the costs caused by the use of the subscriber device without a subscriber identity module by the network server NS. This takes place in such a way that the network server notifies the billing centre AC of the mobile network in step 16 of the sum of the costs and the MSISDN identifier (or ISDN identifier) of the subscriber device MS with a subscriber identity module. Figure 2 shows in an exemplary manner that this notification takes place when the connection has been terminated, in other words when the subscriber device PDA no longer has a telecommunication connection. Alternatively, it can be thought that the network server NS notifies the billing centre AC on the costs at given intervals during the connection, for instance.

The billing centre AC enters the costs notified to it into the account of the subscriber device MS with a subscriber identity module for later billing. Thus, the solution according to the invention also allows an individual user to receive only one bill for his/her telecommunication services although he/she has utilized several subscriber devices, for instance a mobile station and a handheld computer, and via different interfaces (mobile network, WLAN system).

There are several alternative implementations for the user to confirm that he/she agrees to pay for the costs relating to the use of the subscriber device without a subscriber identity module. The following describes in an exemplary manner a few alternative implementations:

1) A mobile network sends as a short message, for instance, the confirmation request of step 13 including a MAC identifier. Thus also the confirmation of step 14 can be formed of a short message. When accepting the payment, the user thus sends a short message having predetermined contents to the mobile network with the subscriber device MS with a subscriber identity module. The short message can include for instance a given PIN, which has been given to the user in advance for this purpose and which shows that the user is ready to accept the payment. Hence, one of the network elements of the mobile network or the network server NS, for example, is capable of checking whether the PIN included in the short message is correct. If no confirmation with the correct contents is transmitted from the subscriber device with a subscriber identity module, the network server does not allow the subscriber device without a subscriber identity module to establish a telecommunication connection. The advantage of this alternative is that the subscriber device with a subscriber identity module can be a completely conventional mobile station, to which no modifications needs to be made in order to utilize it in the solution according to the invention.

Instead of short messages, the alternative of item 1 can alternatively be implemented by utilizing the WAP (Wireless Application Protocol) technology, for example. Also this technology allows utilization of a completely conventional mobile station in the solution according to the invention.

2) The subscriber device with a subscriber identity module is provided with an application that can be implemented for instance with a circuit solution, a computer program or a combination thereof. The application can be located in the subscriber device itself or in the subscriber identity module of the subscriber device. When the application receives the confirmation request, it prompts the user to enter a predetermined PIN if he/she agrees to pay. If the PIN entered by the user via a user interface is correct, the application instructs the subscriber device with a subscriber identity module to send a confirmation with predetermined contents to the network server NS.

3) The confirmation request sent by the network server in step 13 triggers the authentication of the subscriber device with a subscriber identity module. The authentication can take place in the same way as in the GSM system, for instance, with the exception that now the network server NS participates in the authentication. The authentication can take place in such a way that the network server first requests the subscriber register HLR for information enabling the authentication of the particular subscriber device with a subscriber identity module, i.e. a random number Rand and a response SRES. After this, the network server NS sends an input Rand to the subscriber device with a subscriber identity module and waits for a response from the subscriber device with a subscriber identity module. If this is particularly the right, authentic subscriber device with a subscriber identity module, the subscriber device sends to the network server NS a message containing exactly the same response SRES (which has been calculated with the subscriber device's individual private key) as the one the network server received from the subscriber register HLR. At the end of the authentication step, the subscriber device with a subscriber identity module acts as in item 2, in other words the application in it requests the user to enter the PIN, which definitely confirms that the user agrees to pay.

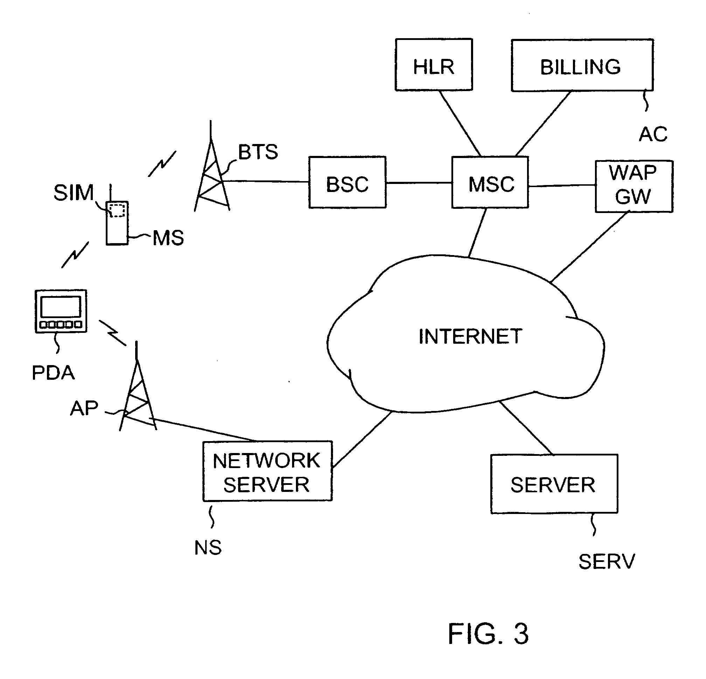

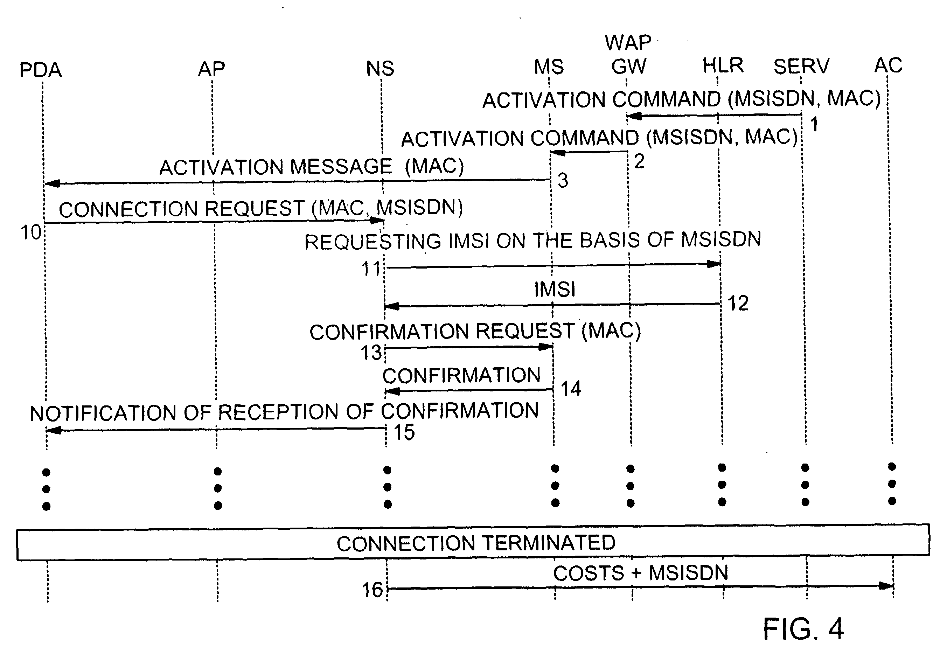

In the following, a second preferred embodiment of the invention is described in more detail with reference to the block diagram of Figure 3 and to the signalling diagram of Figure 4. The embodiment of Figures 3 and 4 corresponds to a great extent to the embodiment of Figures 1 and 2, and therefore the second embodiment is mostly described where it deviates from the first embodiment described in connection with Figures 1 and 2.

Deviating from Figures 1 and 2, also the server SERV of the service provider and the WAP gateway WAP GW are shown in Figures 3 and 4. In the following, it is assumed that the user of the subscriber device PDA without a subscriber identity module has ordered content from the service provider of the subscriber device PDA without a subscriber identity module. Thus, the service provider has a need to be able to trigger the establishment of a connection to the subscriber device PDA without a subscriber identity module when the content is to be delivered.

When the user has ordered content, for instance news or a weather report, from the service provider, the identifier MSISDN of the subscriber device MS with a subscriber identity module and the identifier MAC of the subscriber device without a subscriber identity module of the user in question have been stored in the memory of the server SERV of the service provider. According to a second embodiment of the invention, both of the user's subscriber devices MS and PDA are provided with transmitters and receivers which enable communication between the devices via a wireless connection. The connection can be, for instance, a wireless connection based on the Bluetooth technology.

When the content is to be delivered to the subscriber device without the subscriber identity module, the server SERV of the content provider sends an activation command to the mobile network in step 1. The activation command includes the identifiers MSISDN and MAC of both subscriber devices. In step 2, the mobile network transmits the activation command further from the WAP gateway WAP GW to the subscriber device MS with a subscriber identity module with a WAP Push command.

The subscriber device MS with a subscriber identity module (or its subscriber identity module SIM) identifies the reception of the activation command. The subscriber device MS with a subscriber identity module then sends an activation message via a wireless connection in step 3, the subscriber device having the identifier MAC being given as the receiver in the message. The subscriber device PDA without a subscriber identity module identifies the activation message sent to it on the basis of the identifier MAC, whereby it is activated and sends a connection request presented in step 10 to the network.

Parameters can be included in the activation message sent to the subscriber device without a subscriber identity module which indicate how the subscriber device should act after the activation message has been received. The parameters can indicate, for example, that the subscriber device is to send the above-mentioned connection request. In addition, the parameters can indicate how the subscriber device is to act when the connection exists, in other words they can, for instance, indicate that a connection should be established to the server of the service provider via a telecommunications system.

One option to implement the embodiment of Figures 3 and 4 is to utilize a subscriber device with a subscriber identity module which is Bluetooth-compatible and supports the Object push profile as well as the WAP 2.0 standard and such a WTA implementation with which sending of a visit card can be directed via the Bluetooth. Correspondingly, the subscriber device without a subscriber identity module should, in such a case, be Buetooth-compatible and support the Object exchange profile.

It is to be understood that the above description and the related figures are only intended to illustrate the present invention. Different variations and modifications of the invention within the scope of the attached claims will be apparent to those skilled in the art.

## Claims

1. A method for billing for the use of a subscriber device (PDA) without a subscriber identity module, **characterized by**
storing the identifier of a subscriber device (MS) with a subscriber identity module in the memory of the subscriber device (PDA) without a subscriber identity module;
sending a connection request to a telecommunication network with the subscriber device (PDA) without a subscriber identity module, which connection request includes the identifier of said subscriber device (MS) with a subscriber identity module;
sending a confirmation request by the telecommunication network to the subscriber device (MS) with a subscriber identity module corresponding to the identifier included in the connection request, in which confirmation request confirmation is requested for the user agreeing to pay the costs related to the use of the subscriber device (PDA) without a subscriber identity module;
providing the subscriber device (PDA) without a subscriber identity module with access to the telecommunication network if a confirmation is received from the subscriber device (MS) with a subscriber identity module that the user of the subscriber device (MS) with a subscriber identity module will pay the costs related to the use of the subscriber device (PDA) without a subscriber identity module; and
billing the subscriber of the subscriber device (MS) with a subscriber identity module for the use of the subscriber device (PDA) without a subscriber identity module.

2. A method according to claim 1, **characterized by**
receiving with the subscriber device (PDA) without a subscriber identity module an activation message which the telecommunication network has sent via the subscriber device (MS) with a subscriber identity module; and
sending said connection request with the subscriber device (PDA) without a subscriber identity module as a response to said activation message.

3. A telecommunications system comprising:
a subscriber device (MS) with a subscriber identity module, in the memory (SIM) of which information has been stored that enable the authentication of the subscriber device with a subscriber identity module; and
a billing register (AC) in which information is collected on the costs to be billed, caused by the use of the subscriber device with a subscriber identity module, **characterized in that** the system comprises
a subscriber device (PDA) without a subscriber identity module, in the memory of which an identifier (MSISDN) of the subscriber device (MS) with a subscriber identity module is stored, and which is arranged to send a connection request containing said identifier (MSISDN) for establishing a connection to a telecommunications system;
a network server (NS) arranged to receive the connection request from the subscriber device (PDA) without a subscriber identity module via an access point (AP); to send a confirmation request to the subscriber device (MS) with a subscriber identity module, the identifier (MSISDN) of which was included in the received connection request; and to provide the subscriber device (PDA) without a subscriber identity module with access to the telecommunication network via the access point (AP); as well as to send a notification of the costs related to the use of the subscriber device without a subscriber identity module and the identifier of the subscriber device with a subscriber identity module to the billing register (AC) if a confirmation is received from the subscriber device (MS) with a subscriber identity module that the user of the subscriber device (MS) with a subscriber identity module will pay the costs related to the use of the subscriber device (PDA) without a subscriber identity module; and
that the billing register (AC) is arranged to register all said costs to be paid by the user of the subscriber device with a subscriber identity module.

4. A system according to claim 3, **characterized in that** said access point (AP) is a wireless access point formed of a base transceiver station of a radio system.

5. A system according to claim 3, **characterized in that** said access point is a wired access point to which said subscriber device without a subscriber identity module is connected via a cable.

6. A system according to any one of claims 3 to 5, **characterized in that** said subscriber device (MS) with a subscriber identity module is a mobile station and that said subscriber device (PDA) without a subscriber identity module is a computer, a portable computer or a handheld computer.

7. A system according to any one of claims 3 to 5, **characterized in**
**that** the subscriber device (PDA) without a subscriber identity module is arranged to send said connection request via the access point (AP) to said network server (NS) as a response to a predetermined activation message received via a wireless connection;
**that** the subscriber device (MS) with a subscriber identity module is arranged to send said activation message to the subscriber device (PDA) without a subscriber identity module as a response to an activation command transmitted from the telecommunications system; and
**that** the system comprises a server (SERV) arranged to send said activation command to the subscriber device (MS) with a subscriber identity module to establish a connection to the subscriber device (PDA) without a subscriber identity module.

8. A system according to claim 7, **characterized in that** said server (SERV) is the server of a content provider from whom the user of the subscriber device (PDA) without a subscriber identity module has ordered content for the subscriber device (PDA) without a subscriber identity module.

9. A subscriber device (MS) with a subscriber identity module of a telecommunications system, comprising:
a memory in which the information required for the authentication of the subscriber device (MS) with a subscriber identity module is stored; and
a user interface via which the user of the subscriber device with a subscriber identity module can control the operation of the subscriber device (MS) with a subscriber identity module, **characterized in**
**that** the subscriber device (MS) with a subscriber identity module is arranged, as a response to a confirmation request transmitted from the telecommunications system, to request its user to confirm via the user interface that he/she agrees to pay the costs related to the use of a subscriber device (PDA) without a subscriber identity module; and
**that** the subscriber device with a subscriber identity module is arranged to send a confirmation to the telecommunications network as a response to the information entered via the user interface.

10. A subscriber device (MS) with a subscriber identity module according to claim 9, **characterized in that** the user confirms the payment of the costs by entering a PIN number and that the subscriber device (MS) with a subscriber identity module is arranged to check whether the PIN number is correct and to send a confirmation of the payment of the costs to the telecommunication network if the PIN number is correct.

11. A subscriber device with a subscriber identity module according to claim 9, **characterized in that** the user confirms the payment of the costs by entering the PIN number and that the subscriber device (MS) with a subscriber identity module includes the PIN number entered by the user in the confirmation to be sent to the telecommunication network.

12. A subscriber device with a subscriber identity module according to any one of claims 9 to 11, **characterized in that** the subscriber device (MS) with a subscriber identity module is arranged, as a response to an activation command transmitted from the telecommunication network, to send a predetermined activation message to the subscriber device (PDA) without a subscriber identity module, the activation message indicating that the subscriber device without a subscriber identity module is to send a connection request to the telecommunication network.

13. A subscriber device (PDA) without a subscriber identity module of a telecommunications system, comprising a memory and a user interface, **characterized in that** the subscriber device (PDA) without a subscriber identity module is arranged to send the identifier (MSISDN) of a subscriber device (MS) with a subscriber identity module stored in its memory via the user interface to the telecommunication network in a connection request.

14. A subscriber device without a subscriber identity module according to claim 13, **characterized in that** the subscriber device (PDA) without a subscriber identity module is arranged to transmit said connection request as a response to an activation message received from the subscriber device (MS) with a subscriber identity module.

## Patentansprüche

1. Verfahren zur Vergebührung für die Nutzung eines Teilnehmergerätes (PDA) ohne eine SIM-Karte, ***gekennzeichnet durch***
- Speichern der Kennung eines Teilnehmergerätes (MS) mit einer SIM-Karte in dem Speicher des Teilnehmergerätes (PDA) ohne eine SIM-Karte;
- Senden einer Verbindungsanfrage an ein Telekommunikationsnetz mit dem Teilnehmergerät (PDA) ohne eine SIM-Karte, wobei die Verbindungsanfrage die Kennung des Teilnehmergerätes (MS) mit einer SIM-Karte beinhaltet;
- Senden einer Bestätigungsanfrage von dem Telekommunikationsnetz an das Teilnehmergerät (MS) mit einer SIM-Karte, welches der in der Verbindungsanfrage beinhalteten Kennung entspricht, wobei in der Bestätigungsanfrage die Bestätigung des Teilnehmers angefragt wird, dass sich dieser damit einverstanden erklärt, die mit der Nutzung des Teilnehmergerätes (PDA) ohne eine SIM-Karte verbundenen Kosten zu bezahlen;
- Versehen des Teilnehmergerätes (PDA) ohne eine SIM-Karte mit einem Zugriff auf das Telekommunikationsnetz, wenn eine Bestätigung von dem Teilnehmergerät (MS) mit einer SIM-Karte empfangen wird, dass der Nutzer des Teilnehmergerätes (MS) mit einer SIM-Karte die mit der Nutzung des Teilnehmergerätes (PDA) ohne eine SIM-Karte verbundenen Kosten bezahlen wird; und
- Vergebühren des Nutzers des Teilnehmergerätes (MS) mit einer SIM-Karte für die Nutzung des Teilnehmergerätes (PDA) ohne eine SIM-Karte.

2. Verfahren nach Anspruch 1, ***gekennzeichnet durch***
- Empfangen einer Aktivierungsnachricht mit dem Teilnehmergerät (PDA) ohne eine SIM-Karte, welche das Telekommunikationsnetz über das Teilnehmergerät (MS) mit einer SIM-Karte gesendet hat; und
- Senden der Verbindungsanfrage mit dem Teilnehmergerät (PDA) ohne eine SIM-Karte nach Aufnahme der Aktivierungsnachricht.

3. Telekommunikationssystem, das aufweist:
- ein Teilnehmergerät (MS) mit einer SIM-Karte, in dessen Speicher (SIM) Informationen gespeichert worden sind, welche die Authentifikation des Teilnehmergerätes mit einer SIM-Karte ermöglichen; und
- ein Vergebührungsregister (AC), in dem Informationen bezüglich der zu bezahlenden Kosten gesammelt werden, die durch die Nutzung des Teilnehmergerätes mit einer SIM-Karte verursacht werden, ***dadurch gekennzeichnet, dass*** das System aufweist:
- ein Teilnehmergerät (PDA) ohne eine SIM-Karte, in dessen Speicher eine Kennung (MSISDN) des Teilnehmergerätes (MS) mit einer SIM-Karte gespeichert ist, und welches vorgesehen ist, um eine die Kennung (MSISDN) beinhaltende Verbindungsanfrage zur Herstellung einer Verbindung zu einem Telekommunikationssystem auszusenden;
- einen Netzwerk-Server (NS), der vorgesehen ist, um die Verbindungsanfrage von dem Teilnehmergerät (PDA) ohne eine SIM-Karte über einen Zugangspunkt (AP) zu empfangen; um eine Bestätigungsanfrage an das Teilnehmergerät (MS) mit einer SIM-Karte zu senden, dessen Kennung (MSISDN) in der empfangenen Verbindungsanfrage beinhaltet war; und um das Teilnehmergerät (PDA) ohne eine SIM-Karte über den Zugangspunkt (AP) mit einem Zugriff auf das Telekommunikationsnetzwerk zu versehen; sowie um eine Benachrichtigung über die mit der Nutzung des Teilnehmergerätes ohne eine SIM-Karte verbundenen Kosten und die Kennung des Teilnehmergerätes mit einer SIM-Karte an das Vergebührungsregister (AC) zu senden, wenn von dem Teilnehmergerät (MS) mit einer SIM-Karte eine Bestätigung empfangen wird, dass der Nutzer des Teilnehmergerätes (MS) mit einer SIM-Karte die mit der Nutzung des Teilnehmergerätes (PDA) ohne eine SIM-Karte verbundenen Kosten übernehmen wird; und
- dass das Vergebührungsregister (AC) vorgesehen ist, um sämtliche der von dem Nutzer des Teilnehmergerätes mit einer SIM-Karte zu bezahlenden Kosten zu erfassen.

4. System nach Anspruch 3, ***dadurch gekennzeichnet, dass*** der Zugangspunkt (AP) ein drahtloser Zugangspunkt ist, der aus einer Basis Sende- und Empfangsstation eines Funksystems gebildet ist.

5. System nach Anspruch 3, ***dadurch gekennzeichnet, dass*** der Zugangspunkt ein verdrahteter Zugangspunkt ist, mit dem das Teilnehmergerät ohne eine SIM-Karte über ein Kabel verbunden ist.

6. System nach einem der Ansprüche 3 bis 5, ***dadurch gekennzeichnet, dass*** das Teilnehmergerät (MS) mit einer SIM-Karte eine Mobilstation (MS) und das Teilnehmergerät (PDA) ohne eine SIM-Karte ein Computer, ein Laptop oder ein Hendheld-Computer ist.

7. System nach einem der Ansprüche 3 bis 5, ***dadurch gekennzeichnet, dass***
- das Teilnehmergerät (PDA) ohne eine SIM-Karte vorgesehen ist, um die Verbindungsanfrage nach Aufnahme einer über eine drahtlose Verbindung empfangenen, vorbestimmten Aktivierungsnachricht über den Zugangspunkt (AP) zu dem Netzwerk-Server (NS) zu senden;
- das Teilnehmergerät (MS) mit einer SIM-Karte vorgesehen ist, um die Aktivierungsnachricht nach Aufnahme eines von dem Telekommunikationssystem ausgesendeten Aktivierungsbefehls an das Teilnehmergerät (PDA) ohne eine SIM-Karte zu senden; und
- das System einen Server (SERV) aufweist, der vorgesehen ist, um den Aktivierungsbefehl an das Teilnehmergerät (MS) mit einer SIM-Karte zu senden, um eine Verbindung zu dem Teilnehmergerät (PDA) ohne eine SIM-Karte herzustellen.

8. System nach Anspruch 7, ***dadurch gekennzeichnet, dass*** der Server (SERV) der Server eines Inhaltsanbieters ist, von dem der Nutzer des Teilnehmergerätes (PDA) ohne eine SIM-Karte Inhalt für das Teilnehmergerät (PDA) ohne eine SIM-Karte geordert hat.

9. Teilnehmergerät (MS) mit einer SIM-Karte eines Telekommunikationssystems, das aufweist:
- einen Speicher, in dem die für die Authentifikation des Teilnehmergerätes (MS) mit einer SIM-Karte erforderlichen Informationen gespeichert sind; und
- eine Teilnehmerschnittstelle, über welche der Nutzer des Teilnehmergerätes mit einer SIM-Karte den Betrieb des Teilnehmergerätes (MS) mit einer SIM-Karte steuern kann, ***dadurch gekennzeichnet, dass***
- das Teilnehmergerät (MS) mit einer SIM-Karte vorgesehen ist, um bei seinem Nutzer nach Aufnahme einer von dem Telekommunikationsnetz ausgesendeten Bestätigungsanfrage anzufragen, über die Teilnehmerschnittstelle zu bestätigen, dass er/sie sich damit einverstanden erklärt, die mit der Nutzung eines Teilnehmergerätes (PDA) ohne eine SIM-Karte verbundenen Kosten zu bezahlen; und
- das Teilnehmergerät mit einer SIM-Karte vorgesehen ist, um nach Aufnahme der über die Teilnehmerschnittstelle eingegebenen Informationen eine Bestätigung an das Telekommunikationsnetz zu senden.

10. Teilnehmergerät (MS) mit einer SIM-Karte nach Anspruch 9, ***dadurch gekennzeichnet, dass***
- der Nutzer die Zahlung der Kosten bestätigt, indem er eine PIN-Nummer eingibt; und
- das Teilnehmergerät (MS) mit einer SIM-Karte vorgesehen ist, um zu überprüfen, ob die PIN-Nummer korrekt ist, und um eine Bestätigung über die Zahlung der Kosten an das Telekommunikationsnetz zu senden, wenn die PIN-Nummer korrekt ist.

11. Teilnehmergerät mit einer SIM-Karte nach Anspruch 9, ***dadurch gekennzeichnet, dass***
- der Nutzer die Zahlung der Kosten bestätigt, indem er eine PIN-Nummer eingibt; und
- das Teilnehmergerät (MS) mit einer SIM-Karte die PIN-Nummer aufweist, die von dem Nutzer bei der an das Telekommunikationsnetz zu sendenden Bestätigung eingegeben wird.

12. Teilnehmergerät mit einer SIM-Karte nach einem der Ansprüche 9 bis 11, ***dadurch gekennzeichnet, dass*** das Teilnehmergerät (MS) mit einer SIM-Karte vorgesehen ist, um nach Aufnahme eines von dem Telekommunikationsnetz ausgesendeten Aktivierungsbefehls eine vorbestimmte Aktivierungsnachricht an das Teilnehmergerät (PDA) ohne eine SIM-Karte zu senden, wobei die Aktivierungsnachricht angibt, dass das Teilnehmergerät ohne eine SIM-Karte eine Verbindungsanfrage an das Telekommunikationsnetz senden soll.

13. Teilnehmergerät (PDA) ohne eine SIM-Karte eines Telekommunikationssystems, welches einen Speicher und eine Teilnehmerschnittstelle aufweist, ***dadurch gekennzeichnet, dass*** das Teilnehmergerät (PDA) ohne eine SIM-Karte vorgesehen ist, um die in seinem Speicher gespeicherte Kennung (MSISDN) eines Teilnehmergerätes mit einer SIM-Karte über die Teilnehmerschnittstelle in einer Verbindungsanfrage an das Telekommunikationsnetz zu senden.

14. Teilnehmergerät ohne eine SIM-Karte nach Anspruch 13, ***dadurch gekennzeichnet, dass*** das Teilnehmergerät (PDA) ohne eine SIM-Karte vorgesehen ist, um die Verbindungsanfrage nach Aufnahme einer von dem Teilnehmergerät (MS) mit einer SIM-Karte empfangenen Aktivierungsnachricht auszusenden.

## Revendications

1. Procédé de facturation de l'utilisation d'un dispositif d'abonné (PDA) ne comportant pas de module d'identification d'abonné, **caractérisé par**
la mémorisation de l'identifiant d'un dispositif d'abonné (MS) comportant un module d'identification d'abonné dans la mémoire dudit dispositif d'abonné (PDA) ne comportant pas de module d'identification d'abonné;
l'envoi, à un réseau de télécommunication, d'une demande de connexion au dispositif d'abonné (PDA) ne comportant pas de module d'identification d'abonné, laquelle demande de connexion incluant l'identifiant dudit dispositif d'abonné (MS) comportant un module d'identification d'abonné;
l'envoi, par le réseau de télécommunications, d'une demande de confirmation au dispositif d'abonné (MS) comportant un module d'identification d'abonné correspondant à l'identifiant inclus dans la demande de connexion, confirmation lors de laquelle une confirmation que l'abonné accepte de payer les coûts liés à l'utilisation du dispositif d'abonné (PDA) ne comportant pas de module d'identification d'abonné, est demandée;
le fait de prévoir pour le dispositif d'abonné (PDA) ne comportant pas de module d'identification d'abonné l'accès au réseau de télécommunication si une confirmation est reçue de la part du dispositif d'abonné (MS) comportant un module d'identification d'abonné, du fait que l'utilisateur du dispositif d'abonné (MS)comportant un module d'identification d'abonné paiera les coûts liés à l'utilisation du dispositif d'abonné (PDA) ne comportant pas de module d'identification d'abonné; et
la facturation de l'abonné du dispositif d'abonné (MS) comportant un module d'identification d'abonné pour l'utilisation du dispositif d'abonné (PDA) ne comportant pas de module d'identification d'abonné.

2. Procédé selon la revendication 1, **caractérisé par**
la réception, par le dispositif d'abonné (PDA) ne comportant pas de module d'identification d'abonné, d'un message d'activation, que le réseau de télécommunication a envoyé par l'intermédiaire du dispositif d'abonné (MS) comportant un module d'identification d'abonné; et
l'envoi de ladite demande de connexion au dispositif d'abonné (PDA) ne comportant pas de module d'identification d'abonné en réponse audit message d'activation.

3. Système de télécommunication comprenant :
un dispositif d'abonné (MS) comportant un module d'identification d'abonné, dans la mémoire (SIM) duquel a été mémorisée une information permettant l'authentification du dispositif d'abonné comportant un module d'identification d'abonné; et
un registre de facturation (AC), dans lequel est collectée l'information sur les coûts devant être facturés, qui sont entraînés par l'utilisation du dispositif d'abonné comportant un module d'identification d'abonné,
**caractérisé en ce que** le système comprend :
un dispositif d'abonné (PDA) ne comportant pas de module d'identification d'abonné, dans la mémoire duquel est mémorisé un identifiant (MSISDN) du dispositif d'abonné (MS) comportant un module d'identification d'abonné et qui est agencé de manière à envoyer une demande de connexion contenant ledit identifiant (MSISDN) pour l'établissement d'une connexion avec un système de télécommunication;
un serveur de réseau (NS) agencé de manière à recevoir la demande de connexion de la part du dispositif d'abonné (PDA) ne comportant pas de module d'identification d'abonné par l'intermédiaire d'un point d'accès (AP); envoyer une demande de confirmation au dispositif d'abonné (MS) comportant un module d'identification d'abonné, dont l'identifiant (MSISDN) a été inclus dans la demande de connexion reçue; et pour fournir au dispositif d'abonné (PDA) ne comportant pas de module d'identification d'abonné l'accès au réseau de télécommunication par l'intermédiaire du point d'accès (AP); ainsi que pour envoyer une notification des coûts liés à l'utilisation du dispositif d'abonné ne comportant pas de module d'identification d'abonné et à l'identifiant du dispositif d'abonné comportant un module d'identification d'abonné au registre de facturation (AP) si une confirmation est reçue, de la part du dispositif d'abonné (MS) comportant un module d'identification, du fait que l'utilisateur du dispositif d'abonné (MS) comportant un module d'identification d'abonné paiera les coûts liés à l'utilisation du dispositif d'abonné (PDA) ne comportant pas le module d'identification d'abonné; et
que le registre de facturation (AC) est agencé de manière à enregistrer l'ensemble desdits coûts devant être payés par l'utilisateur du dispositif d'abonné comportant un module d'identification d'abonné.

4. Système selon la revendication 3, **caractérisé en ce que** ledit point d'accès (AP) est un point d'accès sans fil, formé d'une station d'émission-réception de base d'un système radio.

5. Système selon la revendication 3, **caractérisé en ce que** ledit point d'accès est un point d'accès câblé, auquel ledit dispositif d'abonné ne comportant pas de module d'identification d'abonné est connecté par l'intermédiaire d'un câble.

6. Système selon l'une quelconque des revendications 3 à 5, **caractérisé en ce que** ledit dispositif d'abonné (MS) comportant un module d'identification d'abonné est un poste mobile et ledit dispositif d'abonné (PDA) ne comportant pas de module d'identification d'abonné est un ordinateur, un ordinateur portable ou un ordinateur tenu à la main.

7. Système selon l'une quelconque des revendications 3 à 5, **caractérisé en ce**
**que** le dispositif d'abonné (PDA) ne comportant pas de module d'identification d'abonné est agencé de manière à envoyer ladite demande de connexion par l'intermédiaire dudit point d'accès (AP) audit serveur de réseau (NS) en tant que réponse à un message d'activation prédéterminé reçu par l'intermédiaire d'une connexion sans fil;
**que** le dispositif d'abonné (MS) comportant un module d'identification d'abonné est agencé de manière à envoyer ledit message d'activation au dispositif d'abonné (PDA) ne comportant pas de module d'identification d'abonné en tant que réponse à un ordre d'activation transmis par le système de télécommunication;
**que** le système comprend un serveur (SERV) agencé de manière à envoyer ledit ordre d'activation au dispositif d'abonné (MS) comportant un module d'identification d'abonné, pour établir une connexion avec le dispositif d'abonné (PDA) ne comportant pas de module d'identification d'abonné.

8. Système selon la revendication 7, **caractérisé en ce que** ledit serveur (SERV) est le serveur d'un fournisseur de contenu, auprès duquel l'utilisateur du dispositif d'abonné (PDA) ne comportant pas de module d'identification d'abonné a commandé un contenu pour le dispositif d'abonné (PDA) ne comportant pas de module d'identification d'abonné.

9. Dispositif d'abonné (MS) comportant un module d'identification d'abonné d'un système de télécommunication, comprenant :
une mémoire, dans laquelle est mémorisée l'information requise pour l'authentification du dispositif d'abonné (MS) comportant un module d'identification d'abonné; et
une interface d'utilisateur, au moyen de laquelle l'utilisateur du dispositif d'abonné comportant un module d'identification d'abonné peut commander le fonctionnement du dispositif d'abonné (MS) avec un module d'identification d'abonné,
**caractérisé en ce**
**que** le dispositif d'abonné (MS) comportant un module d'identification d'abonné est agencé pour demander à son utilisateur, en réponse à une demande de confirmation transmise par le système de télécommunication, de confirmer au moyen de l'interface d'utilisateur qu'il accepte de payer les coûts liés à l'utilisation d'un dispositif d'abonné (PDA) ne comportant pas de module d'identification d'abonné; et
**que** le dispositif d'abonné comportant un module d'identification d'abonné est agencé de manière à envoyer une confirmation au réseau de télécommunication en tant que réponse à l'information introduite par l'intermédiaire de l'interface d'utilisateur.

10. Dispositif d'abonné (MS) comportant un module d'identification d'abonné selon la revendication 9, **caractérisé en ce que** l'utilisateur confirme le paiement des coûts en introduisant un numéro (PIN) et que le dispositif d'abonné (MS) comportant un module d'identification d'abonné est agencé de manière à vérifier si le numéro (PIN) est correct et à envoyer une confirmation du paiement des coûts au réseau de télécommunication si le numéro PIN est correct.

11. Dispositif d'abonné comportant un module d'identification d'abonné selon la revendication 9, **caractérisé en ce que** l'utilisateur confirme le paiement des coûts en introduisant le numéro PIN et que le dispositif d'abonné (MS) comportant un module d'identification d'abonné inclut le numéro PIN introduit par l'utilisateur dans la confirmation devant être envoyée au réseau de télécommunication.

12. Dispositif d'abonné comportant un module d'identification d'abonné selon l'une quelconque des revendications 9 à 11, **caractérisé en ce que** le dispositif d'abonné (MS) comportant un module d'identification d'abonné est agencé pour envoyer, en réponse à un ordre d'activation transmis par le réseau de télécommunication, un message d'activation prédéterminé au dispositif d'abonné (PDA) ne comportant pas de module d'identification d'abonné, le message d'activation indiquant que le dispositif d'abonné ne comportant pas de module d'identification d'abonné doit envoyer une demande de connexion au réseau de télécommunication.

13. Dispositif d'abonné (PDA) ne comportant pas de module d'identification d'abonné d'un système de télécommunication, et comprenant une mémoire et une interface d'utilisateur, **caractérisé en ce que** le dispositif d'abonné (PDA) ne comportant pas de module d'identification d'abonné est agencé de manière à envoyer l'identifiant (MSISDN) d'un dispositif d'abonné (MS) comportant un module d'identification d'abonné, mémorisé dans sa mémoire, par l'intermédiaire de l'interface d'utilisateur au réseau de télécommunication dans une demande de connexion.

14. Dispositif d'abonné ne comportant pas de module d'identification d'abonné selon la revendication 13, **caractérisé en ce que** le dispositif d'abonné (PDA) ne comportant pas de module d'identification d'abonné est agencé de manière à transmettre ladite demande de connexion en réponse à un message d'activation reçu de la part du dispositif d'abonné (MS) comportant un module d'identification d'abonné.
